# EUROPEAN PATENT APPLICATION

(11) **EP 4 717 495 A1**
(43) Date of publication of application: **01.04.2026**
(21) Application number: 25191845.4
(22) Date of filing: 25.07.2025
(51) Int. Cl.: B60K 35/65, B60K 35/81

(54) **HOST, USER IDENTIFICATION SYSTEM, AND USER IDENTIFICATION METHOD**

(30) Priority: 26.09.2024 US 202463699752 P; 13.05.2025 US 202519206081
(71) Applicant: Himax Technologies Limited, Tainan City 744092 (TW)
(72) Inventor: CHAN, Jia Rong, 744092 Tainan City (TW); HUANG, Te Yu, 744092 Tainan City (TW); CHEN, Heng Xiao, 744092 Tainan City (TW); LIN, Yu-Hsiang, 744092 Tainan City (TW); CHUANG, Chun-Kai, 744092 Tainan City (TW); TSENG, Chun Han, 744092 Tainan City (TW); HUNG, Pei-Yuan, 744092 Tainan City (TW); CHIU, Wen-Tse, 744092 Tainan City (TW)
(74) Representative: Pritzlaff, Stefanie Lydia

(57) **Abstract**

A host (100), a user identification system, and a user identification method (500) are described herein. The host (100) includes a storage circuit (102) and a processor (104). The storage circuit (102) is configured to store a program code. The processor (104) is coupled to the storage circuit (102) and configured to access the program code. The processor (104) is configured to receive a touch signal from a touch screen (204). The processor is configured to determine an identification result indicating that whether the touch signal comprises a user identification signal or not. The processor is configured to determine a current operator of the touch screen (204) based on the identification result. The processor (104) is configured to perform an operation on the touch screen (204) based on the current operator.

## Description

### BACKGROUND

### Technical Field

The disclosure relates to a host; particularly, the disclosure relates to a host, a user identification system, and a user identification method.

### Description of Related Art

Modern vehicles are increasingly integrating diverse electronic systems, offering a wide array of functionalities to enhance the driving experience. A key feature in many of these vehicles is the inclusion of a touchscreen of a central display. This central display serves as a control hub, allowing users to interact with various onboard systems such as navigation, entertainment, climate control, and vehicle settings, providing a convenient and intuitive way to manage the vehicle's features.

### SUMMARY

The disclosure is direct to a host, a user identification system, and a user identification method, so as to offer a balance between ease of use and enhanced safety measures for a touchscreen system in a vehicle.

The embodiments of the disclosure provide a host. The host includes a storage circuit and a processor. The storage circuit is configured to store a program code. The processor is coupled to the storage circuit and configured to access the program code. The processor is configured to receive a touch signal from a touch screen. The processor is configured to determine an identification result indicating that whether the touch signal comprises a user identification signal or not. The processor is configured to determine a current operator of the touch screen based on the identification result. The processor is configured to perform an operation on the touch screen based on the current operator.

The embodiments of the disclosure provide a user identification system. The user identification system includes a signal generator, a touch screen, and a host. The signal generator is configured to provide a user identification signal. The touch screen is configured to generate a touch signal. The host includes a storage circuit and a processor. The storage circuit is configured to store a program code. The processor is coupled to the storage circuit and configured to access the program code. The processor is configured to receive the touch signal from the touch screen. The processor is configured to determine an identification result indicating that whether the touch signal comprises the user identification signal or not. The processor is configured to determine a current operator of the touch screen based on the identification result. The processor is configured to perform an operation on the touch screen based on the current operator.

The embodiments of the disclosure provide a user identification method. The user identification method includes following steps. Through a processor, a touch signal is received from the touch screen. Through the processor 104, an identification result is determined and the identification result indicates that whether the touch signal comprises a user identification signal or not. Through the processor, a current operator of the touch screen is determined based on the identification result. Through the processor, an operation on the touch screen 204 is performed based on the current operator.

Based on the above, according to the host, the user identification system, and the user identification method, a current operator is automatically identified when a touch screen is touched, thereby offering a balance between ease of use and enhanced safety measures for a touchscreen system in a vehicle.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram of a host according to an embodiment of the disclosure.
FIG. 2A is a schematic diagram of a user identification scenario according to an embodiment of the disclosure.
FIG. 2B is a schematic diagram of a user identification scenario according to an embodiment of the disclosure.
FIG. 3 is a schematic diagram of a user identification scenario according to an embodiment of the disclosure.
FIG. 4 is a schematic diagram of a signal providing configuration according to an embodiment of the disclosure.
FIG. 5 is a schematic flowchart of a user identification method according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

While a touchscreen system in a vehicle offers significant convenience for controlling various functions, a potential safety concern arises from the act of physically touching the screen. This interaction can momentarily divert the driver's visual and cognitive attention away from the road, leading to distractions and consequently raising legitimate safety concerns regarding their use while driving.

To enhance safety during transit, many vehicles implement a feature that disables the touchscreen while the car is in motion. However, this restriction often extends to passengers as well, preventing them from using the controls. While intended to minimize driver distraction, this blanket prohibition can be perceived as an overly restrictive measure for occupants other than the driver.

In this disclosure, a signal for identification is generated by a signal generator and applied on an occupant of a vehicle. By recognizing the signal carried by the occupant, an identity of the occupant is determined. In this manner, a current operator is automatically identified when a touch screen is touched. Therefore, when the vehicle is in motion, the driver do not have the access to the touch screen, while the passengers still have access to the touch screen, thus offering a balance between ease of use and enhanced safety measures.

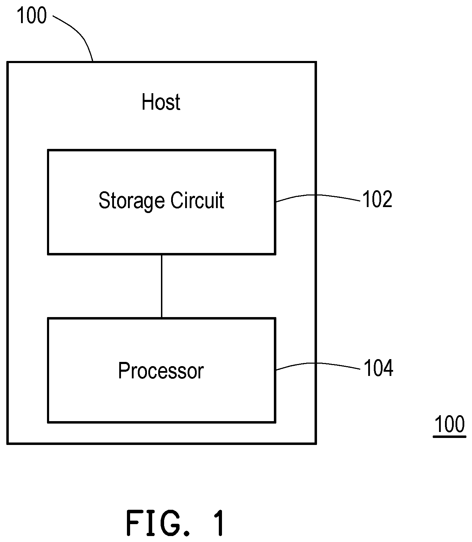

FIG. 1 is a schematic diagram of a host according to an embodiment of the disclosure. In FIG. 1, the host 100 includes a storage circuit 102 and a processor 104. In various embodiments, a host 100 may be any smart device and/or computer device. However, this disclosure is not limited thereto.

The storage circuit 102 may be one or a combination of a stationary or mobile random access memory (RAM), read-only memory (ROM), flash memory, hard disk, or any other similar device, and which records a plurality of modules and/or a program code that can be executed by the processor 104.

The processor 104 may be coupled with the storage circuit 102, and the processor 104 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the processor 104 may access the modules and/or the program code stored in the storage circuit 102 to implement the user identification method provided in the disclosure, which would be further discussed in the following.

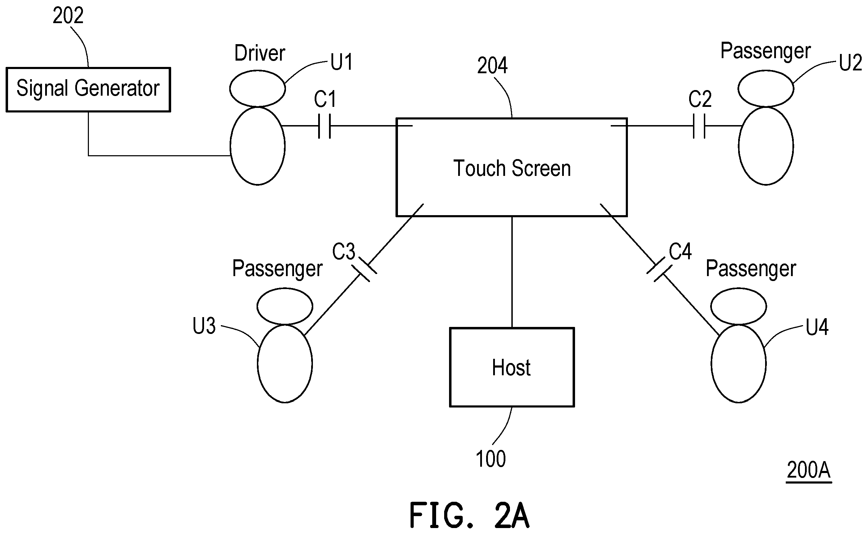

FIG. 2A is a schematic diagram of a user identification scenario according to an embodiment of the disclosure. With reference to FIG. 1 and FIG. 2A, a user identification scenario 200A includes the host 100, a signal generator 202, a touch screen 204, and users U1~U4. It is noted that, the host 100, the signal generator 202, and the touch screen 204 may be disposed in a vehicle. That is, the users U1~U4 may include a driver of the vehicle or a passenger of the vehicle. For example, the user U1 may be the driver and the users U2~U4 may be the passenger. Further, the host 100, the signal generator 202, and the touch screen 204 may form a user identification system provided in the disclosure. However, this disclosure is not limited thereto.

In one embodiment, the signal generator 202 may be configured to provide a user identification signal and the user identification signal may be configured to be applied on the user U1. That is, the user identification signal is only applied on the user U1 and the user identification signal is not applied on the users U2~U4. In other words, only the user U1 carries the user identification signal while the users U2~U4 do not carry the user identification signal. In one embodiment, a frequency of the user identification signal may be from 20KHz to 120KHz and/or an energy (voltage) of the user identification signal may be from 5 Volt to 20 Volt. However, this disclosure is not limited thereto.

It is noted that, when the user U1 touches the touch screen 204, the user identification signal may be transmitted from the user U1 to the touch screen 204. Further, the user identification signal may be included in a touch signal induced by the touch on the touch screen 204 by the user U1. That is, the touch screen 204 may be configured to generate the touch signal. Moreover, by determining that whether a touch signal comprises the user identification signal or not, an identity of the user U1 may be determined.

For example, an identification may indicate that that whether a touch signal comprises the user identification signal or not. When the touch signal is induced by the user U1, the identification result may indicate the touch signal comprises the user identification signal. That is, since only the user U1 carries the user identification signal, a current operator of the touch screen 204 may be determined as the user U1 (i.e., the driver). On the other hand, when the touch signal is induced by one of the users U2~U4, the identification result may indicate the touch signal does not comprise the user identification signal. That is, since the users U2~U4 do not carry the user identification signal, a current operator of the touch screen 204 may be determined as the one of the users U2~U4 (i.e., the passenger). In other words, a current operator of the touch screen may be determined based on the identification result.

Moreover, when the vehicle is in motion and the current operator is the user U1 (i.e. ,the driver), the touch screen 204 may not response to the touch signal induced by the user U1. That is, an operation of the touch screen 204 may be a noop operation (i.e., no operation). On the other hand, when the vehicle is in motion and the current operator is not the user U1, the touch screen 204 may response to the touch signal induced by one of the users U2~U4 normally. That is, an operation of the touch screen 204 may be a normal operation. In other words, an operation on the touch screen 204 may be performed based on the current operator. Further, the detection of vehicles in motion may be realized by using well-known techniques, while details are not described herein.

In this manner, a current operator is automatically identified when the touch screen 204 is touched. Therefore, when the vehicle is in motion, the driver do not have the access to the touch screen 204, while the passengers still have access to the touch screen 204, thus offering a balance between ease of use and enhanced safety measures.

It is worth mentioned that, the user identification signal may have a user identification frequency or a user identification waveform. That is, by detecting that whether the touch signal comprises the user identification frequency or the user identification waveform, whether the touch signal comprises the user identification signal or not may be determined. In other words, the processor 104 may be configured to determine whether the touch signal comprising the user identification frequency or the user identification waveform to determine that whether the touch signal comprises the user identification signal or not. However, this disclosure is not limited thereto.

In one embodiment, the signal generator 202 may be disposed in a steering wheel of a vehicle, a foot pad of the vehicle, or a seat of the vehicle. That is, the user identification signal may be applied on the user through the steering wheel of a vehicle, the foot pad of the vehicle, or the seat of the vehicle. However, this disclosure is not limited thereto.

In addition, when one of the users U1~U4 touches the touch screen 204, a finger o the one of the users U1~U4 and the touch screen 204 essentially form an equivalent capacitor (e.g., one of the capacitors C1~C4). This capacitive coupling allows the electrical signals present on the user's body to be transmitted to the touch screen 204. By detecting changes in the capacitance at the point of contact, a location of the touch may be determined. That is, the processor 104 may be configured to determine a touch location (e.g., a touch coordinate) based on the touch signal. In other words, by analyzing the touch signal, an identity of the current operator and a touch location may be both determined. In this manner, the user identification system may be achieved without significantly increasing the complexity of the overall design.

In some embodiments, each of the host 100, the signal generator 202, and the touch screen 204 may include a communication circuit and the communication circuit may include, for example, a wired network module, a wireless network module, a Bluetooth module, an infrared module, a radio frequency identification (RFID) module, a Zigbee network module, or a near field communication (NFC) network module, but the disclosure is not limited thereto. That is, the host 100, the signal generator 202, and the touch screen 204 may communicate with each other through either wired communication or wireless communication.

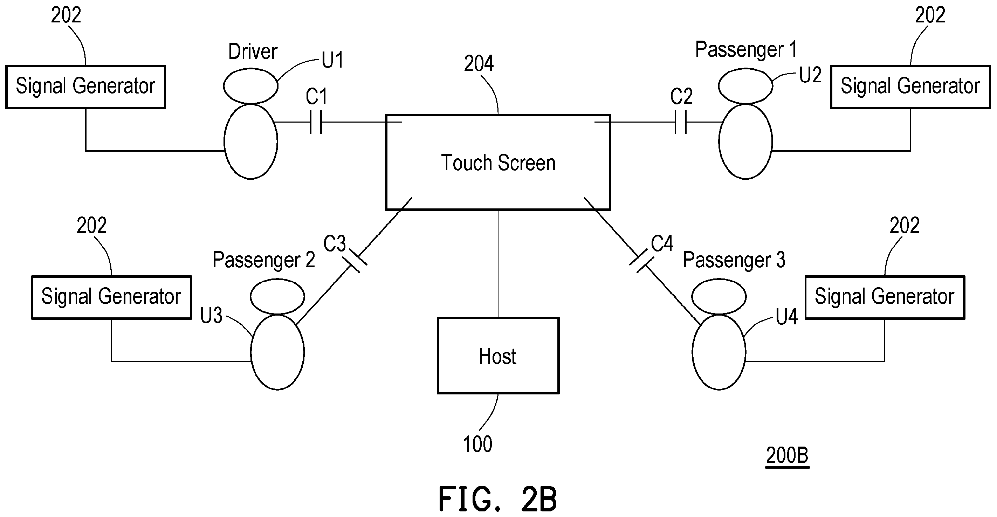

FIG. 2B is a schematic diagram of a user identification scenario according to an embodiment of the disclosure. With reference to FIG. 2A and FIG. 2B, the difference between FIG. 2A and FIG. 2B is that the user identification signal is only applied on the user U1 in the user identification scenario 200A and different user identification signals are respectively applied on all the users U1~U4 in a user identification scenario 200B. For the sake of brevity, similar configurations may be referred to the description of FIG. 2A while details are not redundantly described seriatim herein.

In one embodiment, four signal generators 202 may be configured provide four different user identification signals and these four different identification signals may be configured to be respectively applied on four users U1~U4. That is, one user identification signal is applied on one of the users U1~U4. In other words, each of the users U1~U4 carries one user identification signal.

It is noted that, when one of the users U1~U4 touches the touch screen 204, the user identification signal carried by the one of the users U1~U4 may be transmitted to the touch screen 204. Further, by identifying the received user identification signal, an identity of the one of the users U1~U4 may be determined.

For example, the four user identification signal may include a first user identification signal, a second user identification signal, a third user identification signal, and a fourth user identification signal. Further, the first user identification signal is applied on the user U1, the second user identification signal is applied on the user U2, the third user identification signal is applied on the user U3, and the fourth user identification signal is applied on the user U4. That is, the processor 104 may be configured to: in response to the touch signal including the first user identification signal, determine the current operator as the user U1 (i.e., the driver). In addition, the processor 104 may be configured to: in response to the touch signal including the second user identification signal, determine the current operator as the user U2 (i.e., the passenger).

It is worth mentioned that, these four user identification signal may have different frequencies and/or different waveforms. For example, the first user identification signal has a first user identification frequency and the second user identification signal has a second user identification frequency. That is, the processor 104 may be configured to determine the current operator based on a frequency of the user identification signal. On the other hand, the first user identification signal has a first user identification waveform and the second user identification signal has a second user identification waveform. That is, the processor 104 may be configured to determine the current operator based on a waveform of the user identification signal. However, this disclosure is not limited thereto.

In this manner, a current operator is automatically identified when the touch screen 204 is touched, which enables personalized settings and features for each of the users U1~U4. Therefore, the user experience is improved.

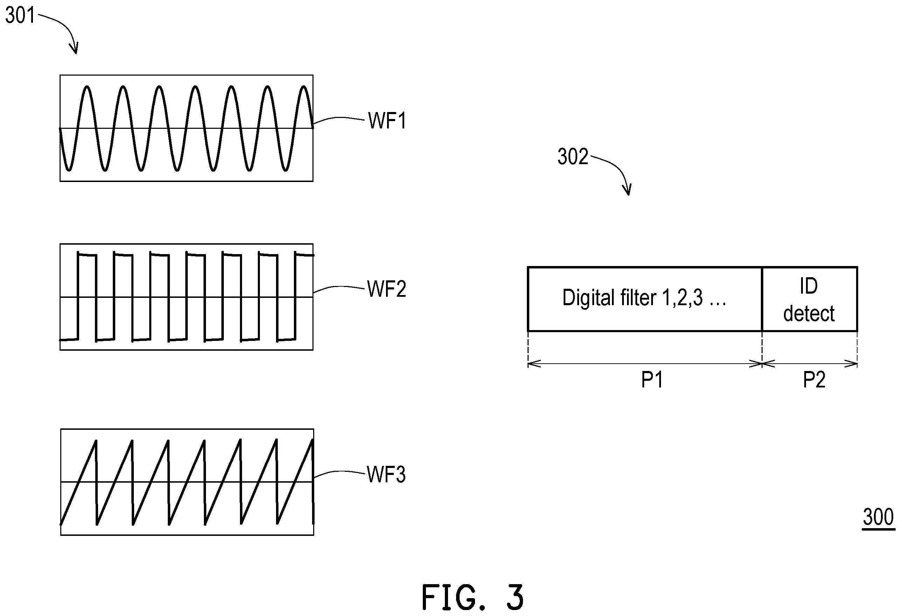

FIG. 3 is a schematic diagram of a user identification scenario according to an embodiment of the disclosure. With reference to FIG. 1 to FIG. 3, a user identification scenario 300 includes a waveform set 301 and a sensing sequence 302.

Reference is first made to the waveform set 301. The waveform set 301 may include waveforms WF1~WF3. In one embodiment, the waveform WF1 may be a sinusoidal wave, the waveform WF2 may be a square wave, and the waveform WF3 may be a sawtooth wave. However, this disclosure is not limited thereto. Further, the waveforms WF1~WF3 may be respectively assigned to different user identification signals. Therefore, by identifying the received user identification signal, an identity of a current operator of the touch screen 204 may be determined.

Reference is now made to the sensing sequence 302. The sensing sequence 302 may include periods P1~P2. In the period P1, the processor 104 may be configured to collect raw data of a touch signal induced by a touch of an operator. In one embodiment, the touch screen 204 may be coupled to a plurality of digital filters. The plurality of digital filters may be to convert an analog signal induced by the touch of the operator to a digital signal. That is, the plurality of digital filters may include analog-to-digital converts. Further, the plurality of digital filters may correspond to different frequencies. That is, each of the plurality of digital filters may be configured to convert an analog signal in a certain frequency to a digital signal (i.e., the touch signal).

In the period P2, the processor 104 may be configured to detect a current operator of the touch screen 204 based on a user identification algorithm. In one embodiment, the user identification algorithm may be configured to determine a frequency and/or a waveform of the user identification signal included in the touch signal. Based on the frequency and/or the waveform of the user identification signal, a current operator of the touch screen 204 may be determined.

Moreover, in the period P2 or another period of the sensing sequence, the processor 104 may be configured to determine a touch location (e.g., a touch coordinate) based on the touch signal. That is, by analyzing the touch signal, an identity of the current operator and a touch location may be both determined. In this manner, the user identification system may be achieved without significantly increasing the complexity of the overall design.

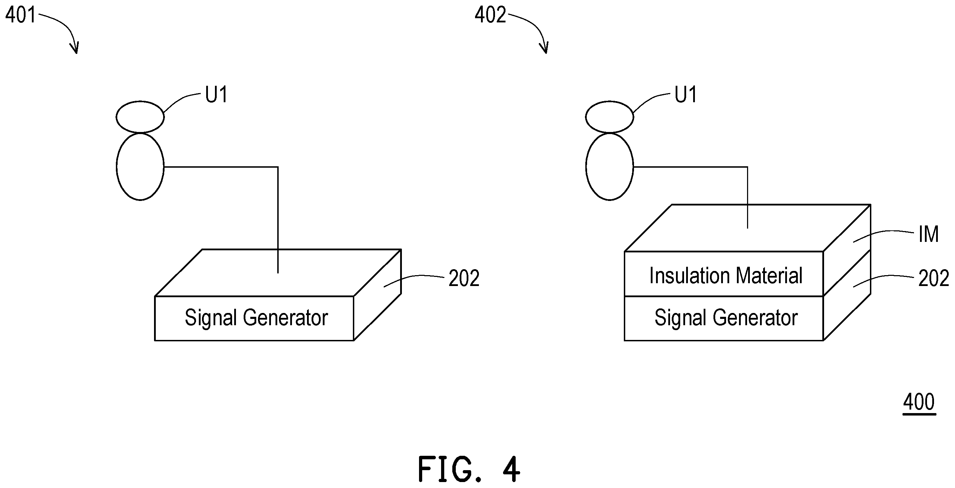

FIG. 4 is a schematic diagram of a signal providing configuration according to an embodiment of the disclosure. With reference to FIG. 2A, FIG. 2B, and FIG. 4, a signal providing configuration 400 includes a direct contact configuration 401 and an indirect contact configuration 402.

Reference is first made to the direct contact configuration 401. In the direct contact configuration 401, the signal generator 202 may be configured to apply the user identification signal directly on the user U1. For example, the signal generator 202 may be disposed on a surface of one of a steering wheel of a vehicle, a foot pad of the vehicle, and a seat of the vehicle. That is, when the user U1 is staying in the vehicle, a body part of the user U1 may be directly contact to the signal generator 202. However, this disclosure is not limited thereto.

Reference is now made to the indirect contact configuration 402. In the indirect contact configuration 402, the signal generator 202 may be configured to apply the user identification signal indirectly on the user U1 through an insulation material IM. For example, the signal generator 202 may be disposed in one of a steering wheel of a vehicle, a foot pad of the vehicle, and a seat of the vehicle. That is, the insulation material may be the surface of one of a steering wheel of a vehicle, a foot pad of the vehicle, and a seat of the vehicle. In other words, when the user U1 is staying in the vehicle, a body part of the user U1 may be indirectly contact to the signal generator 202. However, this disclosure is not limited thereto.

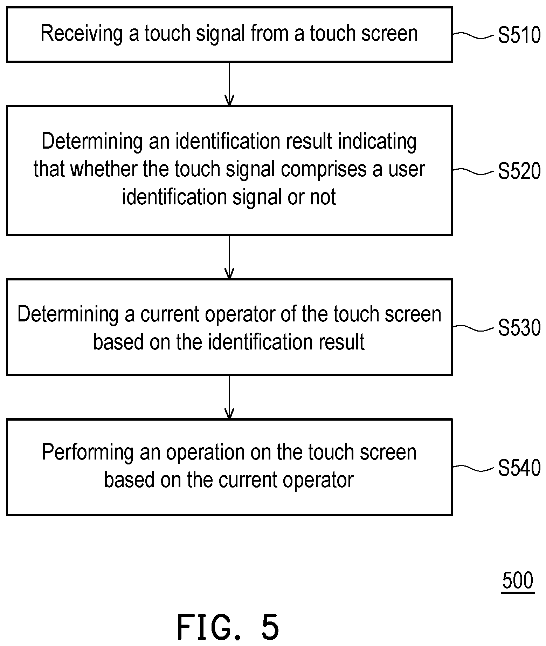

FIG. 5 is a schematic flowchart of a user identification method according to an embodiment of the disclosure. With reference to FIG. 1 to FIG. 5, a user identification method 500 may include steps S510~S540.

In the step S510, through the processor 104, a touch signal is received from the touch screen 204. In the step S520, through the processor 104, an identification result is determined and the identification result indicates that whether the touch signal comprises a user identification signal or not. In the step S530, through the processor 104, a current operator of the touch screen 204 is determined based on the identification result. In the step S540, through the processor 104, an operation on the touch screen 204 is performed based on the current operator.

In addition, the implementation details of the user identification method 500 may be referred to the descriptions of FIG. 1 to FIG. 4 to obtain sufficient teachings, suggestions, and implementation embodiments, while the details are not redundantly described seriatim herein.

In summary, according to the host, the user identification system, and the user identification method, a signal for identification is generated by a signal generator and applied on an occupant of a vehicle. By recognizing the signal carried by the occupant, an identity of the occupant is determined. In this manner, a current operator is automatically identified when a touch screen is touched. Therefore, when the vehicle is in motion, the driver do not have the access to the touch screen, while the passengers still have access to the touch screen, thus offering a balance between ease of use and enhanced safety measures.

## Claims

1. A host (100), comprising:
a storage circuit (102), configured to store a program code; and
a processor (104), coupled to the storage circuit (102) and configured to access the program code to execute:
receiving a touch signal from a touch screen (204);
determining an identification result indicating that whether the touch signal comprises a user identification signal or not;
determining a current operator of the touch screen (204) based on the identification result; and
performing an operation on the touch screen (204) based on the current operator.

2. The host (100) according to claim 1, wherein the user identification signal is provided by a signal generator (202) and is configured to be applied on a user (U1, U2, U3, U4).

3. The host (100) according to claim 2, wherein
the user identification signal has a user identification frequency or a user identification waveform (WF1, WF2, WF3), and
the processor (104) is further configured to access the program code to execute:
determining whether the touch signal comprising the user identification frequency or the user identification waveform (WF1, WF2, WF3) to determine that whether the touch signal comprises the user identification signal or not.

4. The host (100) according to claim 2, wherein the user (U1, U2, U3, U4) comprises a driver of a vehicle or a passenger of the vehicle.

5. The host (100) according to claim 2, wherein the user identification signal is applied on the user through a steering wheel of a vehicle, a foot pad of the vehicle, or a seat of the vehicle.

6. The host (100) according to claim 4, wherein the processor (104) is further configured to access the program code to execute:
in response to the current operator being the driver and the vehicle being in motion, determining the operation as a noop operation; and
in response to the current operator not being the driver and the vehicle being in motion, determining the operation as a normal operation.

7. The host (100) according to claim 4, wherein the processor (104) is further configured to access the program code to execute:
in response to the touch signal comprising the user identification signal, determining the current operator as the driver; and
in response to the touch signal not comprising the user identification signal, determining the current operator as the passenger.

8. The host (100) according to claim 4, wherein
the user identification signal comprises a first user identification signal or a second user identification signal, and
the processor (104) is further configured to access the program code to execute:
in response to the touch signal comprising the first user identification signal, determining the current operator as the driver; and
in response to the touch signal comprising the second user identification signal, determining the current operator as the passenger.

9. The host (100) according to claim 8, wherein
the first user identification signal has a first user identification frequency and the second user identification signal has a second user identification frequency, and
the processor is further configured to access the program code to execute:
determining the current operator based on a frequency of the user identification signal.

10. The host (100) according to claim 8, wherein
the first user identification signal has a first user identification waveform (WF1) and the second user identification signal has a second user identification waveform (WF2), and
the processor is further configured to access the program code to execute:
determining the current operator based on a waveform (WF1, WF2, WF3) of the user identification signal.

11. A user identification system, comprising:
a signal generator (202), configured to provide a user identification signal;
a touch screen (204), configured to generate a touch signal; and
a host (100), comprising:
a storage circuit (102), configured to store a program code; and
a processor (104), coupled to the storage circuit (102) and configured to access the program code to execute:
receiving the touch signal from the touch screen (204);
determining an identification result indicating that whether the touch signal comprises the user identification signal or not;
determining a current operator of the touch screen (204) based on the identification result; and
performing an operation on the touch screen (204) based on the current operator.

12. The user identification system according to claim 11, wherein the user identification signal is configured to be applied on a user (U1, U2, U3, U4).

13. The user identification system according to claim 12, wherein
the user identification signal has a user identification frequency or a user identification waveform (WF1, WF2, WF3), and
the processor (104) is further configured to access the program code to execute:
determining whether the touch signal comprising the user identification frequency or the user identification waveform (WF1, WF2, WF3) to determine that whether the touch signal comprises the user identification signal or not.

14. The user identification system according to claim 12, wherein the user (U1, U2, U3, U4) comprises a driver of a vehicle or a passenger of the vehicle.

15. The user identification system according to claim 12, wherein the user identification signal is applied on the user through a steering wheel of a vehicle, a foot pad of the vehicle, or a seat of the vehicle.

16. The user identification system according to claim 14, wherein the processor (104) is further configured to access the program code to execute:
in response to the current operator being the driver and the vehicle being in motion, determining the operation as a noop operation; and
in response to the current operator not being the driver and the vehicle being in motion, determining the operation as a normal operation.

17. The user identification system according to claim 14, wherein the processor (104) is further configured to access the program code to execute:
in response to the touch signal comprising the user identification signal, determining the current operator as the driver; and
in response to the touch signal not comprising the user identification signal, determining the current operator as the passenger.

18. The user identification system according to claim 14, wherein
the user identification signal comprises a first user identification signal or a second user identification signal, and
the processor (104) is further configured to access the program code to execute:
in response to the touch signal comprising the first user identification signal, determining the current operator as the driver; and
in response to the touch signal comprising the second user identification signal, determining the current operator as the passenger.

19. The user identification system according to claim 18, wherein
the first user identification signal has a first user identification frequency and the second user identification signal has a second user identification frequency, and
the processor is further configured to access the program code to execute:
determining the current operator based on a frequency of the user identification signal.

20. A user identification method (500), comprising:
receiving, through a processor (104), a touch signal from a touch screen (204);
determining, through the processor (104), an identification result indicating that whether the touch signal comprises a user identification signal or not;
determining, through the processor (104), a current operator of the touch screen (204) based on the identification result; and
performing, through the processor (104), an operation on the touch screen (204) based on the current operator.
